(19) Europäisches Patentamt
European Patent Office
Office européen des brevets

(11) **EP 1 783 156 A1**

(12) **EUROPEAN PATENT APPLICATION**

(43) Date of publication:
**09.05.2007 Bulletin 2007/19**

(51) Int Cl.:
***C08G 69/44*** (2006.01)    ***C08G 69/40*** (2006.01)

(21) Application number: **05292324.0**

(22) Date of filing: **03.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Arkema France**
**92800 Puteaux (FR)**

(72) Inventors:
• **Linemann, Annett**
**27550 Nassandres (FR)**

• **Marcq, Philippe**
**27300 Bernay (FR)**
• **Benard, Dominique**
**27300 Corneville la Fouquetiere (FR)**

(74) Representative: **Mouttet, Marie-Paule et al**
**ARKEMA FRANCE**
**Département Propriété Industrielle**
**4-8, cours Michelet**
**La Défense 10**
**92091 Paris La Défense (FR)**

(54) **Process to make copolymers having polyamide blocks and polyether blocks**

(57)    The present invention relates to a process for preparing by condensation copolymers having polyamide blocks and polyether blocks in which polyamide blocks having dicarboxylic chain ends are mixed with :
a polyether having two OH chain ends (a polyetherdiol), and
a polyol having at least 3 OH functions, optionally in the presence of a catalyst.

The polyamide blocks having dicarboxylic chain ends can be prepared by condensation of polyamide precursors in the presence of a chain-limiting dicarboxylic acid.

According to an embodiment of the invention the polyamide blocks having dicarboxylic chain ends is prepared simultaneously with the condensation.

This process has many advantages. The copolymers have a higher molecular weight, higher mechanical properties (impact, processing, filmification etc), remain linear or only weakly branched. The multifunctionality of the polyol is only used for kinetic aspects. As regards the process, there is a reduction of cycle time, reduced technical requirements on to catalyst and vacuum system and a reduce of degradation which means a better colour stability. The process may be carried out in usual apparatus for polyamide synthesis.

The present invention also relates to these copolymers having polyamide blocks and polyether blocks and comprising in its chain the residues of a polyol having at least 3 OH functions. The residues of said polyol are bound to the polyamide blocks through ester links.

**Description**

*Field of the invention*

The present invention relates to a process to make copolymers having polyamide blocks and polyether blocks. The copolymers having polyamide blocks and polyether blocks (PEBA) result from the copolycondensation of polyamide blocks having reactive end groups with polyether blocks having reactive end groups. The present invention concerns introduction of a polyol, such as pentaerythritol during said polycondensation.

*Prior art and technical problem*

Process to make PEBA are described in the following patent applications EP 1 500 684, EP 1 560 872 and EP 1 262527. PEBA may be prepared by any means allowing the polyamide blocks and the polyether blocks to be linked together. In practice, essentially two processes are used, one being called a two-step process and the other a one-step process.
In the two-step process, the polyamide blocks having dicarboxylic chain ends are firstly produced and then, in a second step, these polyamide blocks are linked to the polyether blocks. The polyamide blocks having dicarboxylic chain ends stem, for example, from the condensation of polyamide precursors in the presence of a chain-stopper dicarboxylic acid.
In the one-step process, the polyamide precursors, the chain stopper and the polyether are blended together; what is then obtained is a polymer having essentially polyether blocks and polyamide blocks of very variable length, but also the various reactants that have reacted randomly, which are distributed randomly along the polymer chain.
It is advantageous to carry out the process, whether in one step or in two steps, in the presence of a catalyst and under vacuum. The catalysts disclosed in Patents US 4 331 786, US 4 115 475, US 4 195 015, US 4 839 441, US 4 864 014, US 4 230 838 and US 4 332 920 may be used. In the one-step process, polyamide blocks are also produced, which is why at the start of this paragraph it was stated that PEBA could be prepared by any means of linking the polyamide blocks to the polyether blocks.
The synthesis of high molecular weight PEBA is depending on several parameters like :

- special stoechiometric balance of OH and COOH groups (difficult, because of variable $\overline{Mn}$ of polyether)
- catalyst efficiency ($(BuO)_4Zr$ >> Acetate Zr)
- extent of vacuum (at least 10 mbar absolute pressure, better is 5mbar).

If one of this parametres is out of its special range, the synthesis results in unsufficient molecular weight or extremous cycle times, often also accompanied by colouring of the product (degradation). Now a process has been found to overcome this difficulties: a small amount of an at least trifunctionnal alcohol (in the following named Polyol) is added directly in synthesis as a coupling agent.
This small polyol molecule is effecting all three critical points of PEBA synthesis in a positive way:

it provides additional OH groups to counterbalance stoechiometrically defects,
it is sufficiently hydrophilic to be compatible with more polar catalyst AcZr (Zr acetate).
the kinetic of reaction is influenced such, that medium vacuum of 50 mbar is sufficient to get interesting molecular weights.

No prior art has described such a process. US 5 936 030 describes a block copolymer containing one or more polyoxyethylene blocks and one or more polyoxy(higher alkylene) blocks, wherein at least some of the blocks are linked together by an oxymethylene group. It can be prepared by reacting one or more dihydroxy terminated polymers selected from poly(ethyleneglycol), poly(higher alkylene glycol), and block copolymers thereof in solution with a dihalomethane in the presence of a base. Such copolymers can be used as surfactants and surface modifiers. The reaction can be conducted at ambient temperature, and does not require the addition of heat. The reaction can be carried out using an excess of the dihalomethane as a solvent for the other reactants. Heating is not required as the reaction proceeds at ambient temperature. Polyoxyalkylene block copolymers can be prepared having a higher molecular weight than those prepared using other processes. The methylene oxide linking groups closely resemble the chemical structure of the other groups forming the polymer blocks.
US 2002-0007041 relates to a process for incorporating functional chemical groups into the backbone of polyamides including: contacting a reactant polyamide and (i) a chain extender compound selected from the group consisting of bis-N-acyl bislactam compounds and mixtures thereof and a functional diamine or triamine compound or (ii) a functional chain extender selected from the group consisting of functionalized bis-N-acyl bislactam compounds and optionally a functional diamine or triamine compound, in a liquid phase.

*Brief description of the invention*

The present invention relates to a process for preparing by condensation copolymers having polyamide blocks and polyether blocks in which polyamide blocks having dicarboxylic chain ends are mixed with :

   a polyether having two OH chain ends (a polyetherdiol), and
   a polyol having at least 3 OH functions, optionally in the presence of a catalyst.

The polyamide blocks having dicarboxylic chain ends can be prepared by condensation of polyamide precursors in the presence of a chain-limiting dicarboxylic acid.
According to an embodiment of the invention the polyamide blocks having dicarboxylic chain ends is prepared simultaneously with the condensation. This means the invention relates to a process for preparing by condensation copolymers having polyamide blocks and polyether blocks in which are mixed:

   polyamide precursors and a chain-limiting dicarboxylic acid,
   a polyether having two OH chain ends (a polyetherdiol), and
   a polyol having at least 3 OH functions, optionally in the presence of a catalyst.

The copolymers having polyamide blocks and polyether blocks are then recovered. This process has many advantages. The copolymers have a higher molecular weight, higher mechanical properties (impact, processing, filmification etc), remain linear or only weakly branched. The multifunctionality of the polyol is only used for kinetic aspects. As regards the process, there is a reduction of cycle time, reduced technical requirements on to catalyst and vacuum system and a reduce of degradation which means a better colour stability. The process may be carried out in usual apparatus for polyamide synthesis.
The present invention also relates to these copolymers having polyamide blocks and polyether blocks and comprising in its chain the residues of a polyol having at least 3 OH functions. The residues of said polyol are bound to the polyamide blocks through ester links.

*Detailed description of the invention*

**As regards the polyamide blocks having dicarboxylic chain ends,**

The polyamide blocks are obtained in the presence of a chain-stopper diacid. If the precursors already include a diacid, it is sufficient for example to use it in excess.
As examples of aliphatic alpha,omega-aminocarboxylic acids, mention may be made of aminocaproic, 7-aminoheptanoic, 11-aminoundecanoic and 12-aminododecanoic acids.
As examples of lactams, mention may be made of caprolactam, oenantholactam and lauryllactam.
As examples of aliphatic diamines, mention may be made of hexamethylenediamine and $C_9$ to $C_{25}$ diamines (that is to say those having from 9 to 25 carbon atoms), such as dodecamethylenediamine and trimethylhexamethylenediamine.
As an example of cycloaliphatic diacids, mention may be made of 1,4-cyclohexyldicarboxylic acid.
The aliphatic diacids may be $C_6$ to $C_{25}$ acids (that is to say those having from 6 to 25 carbon atoms).
As examples of aliphatic diacids, mention may be made of butanedioic, adipic, azelaic, suberic, sebacic and dodecanedicarboxylic acids, dimerized fatty acids (these dimerized fatty acids preferably have a dimer content of at least 98%; preferably they are hydrogenated; they are sold under the brand name PRIPOL by Unichema or under the brand name EMPOL by Henkel) and $\alpha,\omega$-polyoxyalkylene diacids.
As examples of aromatic diacids, mention may be made of terephthalic acid (TA) and isophthalic acid (IA).
The cycloaliphatic diamines may be isomers of bis(4-aminocyclohexyl)methane (BACM), bis(3-methyl-4-aminocyclohexyl)-methane (BMACM), 2,2-bis(3-methyl-4-aminocyclohexyl)propane (BMACP) and *para*-aminodicyclohexylmethane (PACM). Other diamines commonly used may be isophoronediamine (IPDA), 2,6-bis(aminomethyl)norbornane (BAMN) and piperazine.
Three types of polyamide blocks may advantageously be used.
According to a first type, the polyamide blocks result from the condensation of one or more alpha,omega-aminocarboxylic acids and/or of one or more lactams having from 6 to 12 carbon atoms, in the presence of a dicarboxylic acid having, for example, from 4 to 12 carbon atoms.

According to a second type, the polyamide blocks result from the condensation of at least one alpha,omega-aminocarboxylic acid (or a lactam), at least one diamine and at least one dicarboxylic acid. According to a variant of this second type, the polyamide blocks result from the condensation of at least two alpha,omega-aminocarboxylic acids or of at least two lactams having from 6 to 12 carbon atoms or of a lactam and of an aminocarboxylic acid not having the same number of carbon atoms, in the presence of a chain stopper.

In the second type, the various constituents of the polyamide block and their proportion may be chosen so as to obtain a melting point of between 60 and 150°C. Low-melting-point copolyamides are disclosed in Patents US 4 483 975, DE 3 730 504 and US 5 459 230. The same proportions of the constituents may also be used for the polyamide blocks.

According to a third type, the polyamide blocks result from the condensation of a diacid and a diamine. An excess of the diacid is used.

**As regards the polyetherdiol,** the polyether blocks can represent 5 to 85% by weight of the copolymer comprising polyamide and polyether blocks. The polyether blocks are composed of alkylene oxide units. These units can, for example, be ethylene oxide units, propylene oxide units or tetrahydrofuran units (which results in polytetramethylene glycol links). PEG blocks, that is to say those composed of ethylene oxide units, PPG blocks, that is to say those composed of propylene oxide units, and PTMG blocks, that is to say those composed of tetramethylene glycol units, also known as polytetrahydrofuran blocks, are thus used. Blocks obtained by oxyethylation of bisphenols, such as, for example, bisphenol A, can be used. The latter products have been disclosed in Patent EP 613 919. The polyether diol can be a polytrimethylene ether glycol, also referred as P03G. It can be made from 1,3-propanediol. Copolymers comprising polyamide blocks and polyether blocks made from polyamide blocks having dicarboxylic chain ends and polytrimethylene ether glycol are described in US patent US 6 590 065. The polyether blocks can also be composed of ethoxylated primary amines.

The amount of polyether blocks in these copolymers comprising polyamide blocks and polyether blocks is advantageously from 10 to 70% by weight of the copolymer, preferably from 35 to 60%.

The number-average molar mass $\overline{Mn}$ of the polyamide blocks is between 400 and 10 000 and preferably between 400 and 4000. The mass $\overline{Mn}$ of the polyether blocks is between 100 and 6000 and preferably between 200 and 3000.

**As regards the polyol having at least 3 OH functions**, advantageously the molecular weight is lower than 1000 and preferably between 50 and 500, more preferably between 50 and 200. Pentaerythritol is preferred. The proportion of polyol is advantageously between 0.01 and 5% (weight) of the copolymer, preferably between 0.1 and 1 %.

**As regards the process,** the two-step process firstly consists in preparing the polyamide blocks having carboxylic end groups by the condensation of the polyamide precursors in the presence of a chain-stopper dicarboxylic acid and then, in a second step, in adding the polyether, the polyol and a catalyst. If the polyamide precursors are only lactams or alpha,omega-aminocarboxylic acids, a dicarboxylic acid is added. If the precursors already comprise a dicarboxylic acid, this is used in excess with respect to the stoichiometry of the diamines. The reaction usually takes place between 180 and 300°C, preferably 200 to 290°C, and the pressure in the reactor is set between 5 and 30 bar and maintained for approximately 2 to 3 hours. The pressure in the reactor is slowly reduced to atmospheric pressure and then the excess water is distilled off, for example for one or two hours.

Once the polyamide having carboxylic acid end groups has been prepared, the polyether, the polyol and a catalyst are then added. The polyether may be added in one or more goes, and the same applies to the catalyst. According to one embodiment, the polyether is added first and the reaction of the OH end groups of the polyether and of the polyol with the COOH end groups of the polyamide starts, with the formation of ester linkages and the elimination of water. The water is removed as much as possible from the reaction mixture by distillation and then the catalyst is introduced in order to complete the linking of the polyamide blocks to the polyether blocks. This second step takes place with stirring, preferably under a vacuum of at least 50 mbar (5000 Pa) at a temperature such that the reactants and the copolymers obtained are in the molten state. By way of example, this temperature may be between 100 and 400°C and usually between 200 and 250°C. The reaction is monitored by measuring the torque exerted by the polymer melt on the stirrer or by measuring the electric power consumed by the stirrer. The end of the reaction is determined by the value of the torque or of the target power. The catalyst is defined as being any product which promotes the linking of the polyamide blocks to the polyether blocks by esterification. Advantageously, the catalyst is a derivative of a metal (M) chosen from the group formed by titanium, zirconium and hafnium.

As examples of derivatives, mention may be made of tetraalkoxides which satisfy the general formula $M(OR)_4$, in which M represents titanium, zirconium or hafnium and the Rs, which are identical or different, denote linear or branched alkyl radicals having from 1 to 24 carbon atoms.

By way of example of other derivatives, mention may also be made of the salts of the metal (M), particularly the salts of (M) and of an organic acid and the complex salts between the oxide of (M) and/or the hydroxide of (M) and an organic acid. Advantageously, the organic acid may be formic acid, acetic acid, propionic acid, butyric acid, valeric acid, caproic acid, caprylic acid, lauric acid, myristic acid, palmitic acid, stearic acid, oleic acid, linoleic acid, linolenic acid, cyclohexanecarboxylic acid, phenylacetic acid, benzoic acid, salicylic acid, oxalic acid, malonic acid, succinic acid, glutaric acid, adipic acid, maleic acid, fumaric acid, phthalic acid and crotonic acid. Acetic and propionic acids are particularly preferred. Advantageously M is zirconium. These salts may be called zirconyl salts. The Applicant believes that these salts of zirconium and of an organic acid or the complex salts mentioned above release $ZrO^{++}$ during the process, without being bound by this explanation. The product used is the one sold under the name zirconyl acetate.

The weight proportion of catalyst advantageously varies from 0.01 to 5% of the weight of the mixture of the dicarboxylic polyamide with the polyetherdiol and the polyol, and preferably lies between 0.05 and 2% of this weight.

This process and these catalysts are described in Patents US 4,332,920, US 4,230,838, US 4,331,786, US 4,252,920, JP 07145368A, JP 06287547A and EP 613919.

With regard to the one-step process, all the reactants used in the two-step process, that is to say the polyamide precursors, the chain-stopper dicarboxylic acid, the polyether, the polyol and the catalyst, are mixed together. They are the same reactants and the same catalyst as in the two-step process described above. If the polyamide precursors are only lactams, it is advantageous to add a little water.

The copolymer has essentially the same polyether blocks and the same polyamide blocks, but also a small portion of the various reactants that have reacted randomly, which are distributed randomly along the polymer chain.

As in the first step of the two-step process described above, the reactor is closed and heated, with stirring. The pressure established is between 5 and 30 bar. When the pressure no longer changes, the reactor is put under reduced pressure while still maintaining vigorous stirring of the molten reactants. The reaction is monitored as previously in the case of the two-step process.

**As regards the copolymers having polyamide blocks and polyether blocks as a new product,** the relative solution viscosity is advantageously between 0.8 and 1.75 dl/g. This relative viscosity is measured as a 0.5% solution in metacresol using an Ostwald viscometer. It comprises in its chain the residues of a polyol having at least 3 OH functions. The residues of said polyol are bound to the polyamide blocks through ester links. These copolymers have advantageously a polydispersity index lp between 2 and 5, advantageously between 2 and 3, while the relative solution viscosity is above 1 and advantageously above 1.2. The lp is the ratio $\overline{Mw}/\overline{Mn}$.

In another way these new copolymers having polyamide blocks and polyether blocks can be characterized by the branching coefficient g' for Long Chain Branching, of varying between 1 and 0,7. This branching coefficient is measured by SEC (Steric Exclusion Chromatography) also known as Gel Permeation Chromatography in benzylic alcohol at 150°C using viscosity detection. Branching coefficient g' is defined to be the ratio of viscosity of linear product divided by viscosity of branched product. The polymer is regarded as linear if g' is > 0,7.

*Examples*

Example 1

CoPA 6.10/11/PEG600
The polyamide block is made of :

hexamethylene diamine (2.3 kg) and sebacic acid (9 kg, including the chain stopper proportion) in stoechiometric proportions,
acide aminoundecanoic $COOH\text{-}(CH2)_{10}\text{-}HN_2$ (9.8 kg),
sebacic acid as chain stopper,

PEG of $\overline{Mn}$ 600 (14.14 kg).

The synthesis is made with and without 0,5% of Pentaerythritol (175 g).

| Parameter | reference | Same product + 0,5% Pentaeritrithol |
|---|---|---|
| Time of Esterification under vacuum | 16;30 h | 4:30 h |
| Vacuum necessary | 5 mbar | 50 mbar |
| Final torque at 240°C | 40 Nm | 60 Nm |
| Solution viscosity | 1,06 | 1, 24 |

(continued)

| Parameter | reference | Same product + 0,5% Pentaeritrithol |
|---|---|---|
| Mn | 13720 g/mol | 13500 g/mol |
| Mw | 22320 g/mol | 33850 g/mol |
| Ip | 1,6 | 2,6 |
| Branching coefficient g' (LCB) | 1 | 0,9 |

Results are on the following chart 1.

**Claims**

1.  Process for preparing by condensation copolymers having polyamide blocks and polyether blocks in which polyamide blocks having dicarboxylic chain ends are mixed with :

    a polyether having two OH chain ends (a polyetherdiol), and
    a polyol having at least 3 OH functions, optionally in the presence of a catalyst.

2.  Process according to claim 1 in which the polyamide blocks having dicarboxylic chain ends are beforehand prepared by condensation of polyamide precursors in the presence of a chain-limiting dicarboxylic acid.

3.  Process according to claim 1 in which are mixed:

    polyamide precursors and a chain-limiting dicarboxylic acid,
    a polyether having two OH chain ends (a polyetherdiol), and
    a polyol having at least 3 OH functions, optionally in the presence of a catalyst.

4.  Process according to any one of the preceding claims in which the molecular weight of the polyol is lower than 1000.

5.  Process according to claim 4 in which the molecular weight of the polyol is between 50 and 500.

6.  Process according to claim 5 in which the polyol is pentaerythritol.

7.  Process according to any one of the preceding claims in which the proportion of polyol is between 0.01 and 5% of the weight of the copolymer.

8.  Process according to claim 7 in which the proportion of polyol is between 0.1 and 1% of the weight of the copolymer.

9.  Copolymers having polyamide blocks and polyether blocks comprising in their chain the residues of a polyol having at least 3 OH functions.

10. Copolymers according to claim 9 in which the residues of said polyol are bound to the polyamide blocks through ester links.

11. Copolymers according to claim 9 or 10 in which the polydispersity index Ip is between 2 and 3

12. Copolymers according to any one of the preceding claims in which the relative solution viscosity is above 1 and advantageously above 1.2.

13. Copolymers according to claim 9 in which the branching coefficient g' (LCB) is > 0,7 .

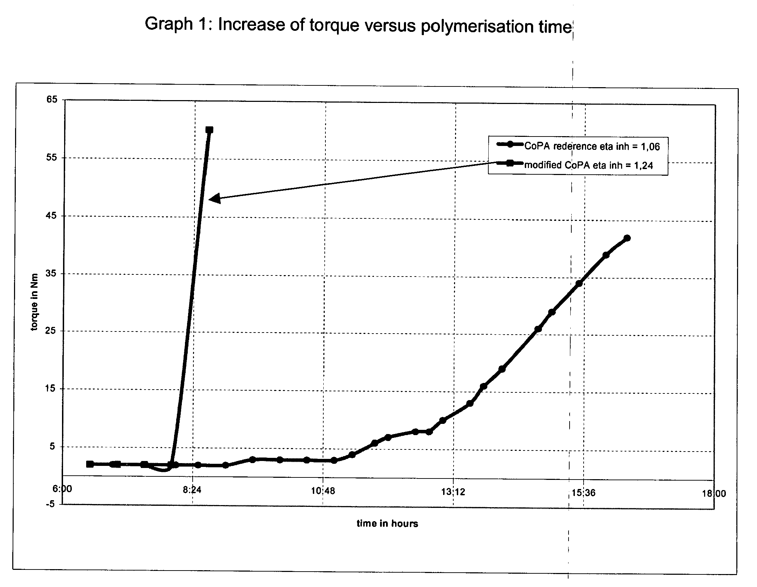

Graph 1: Increase of torque versus polymerisation time

European Patent Office

**EUROPEAN SEARCH REPORT**

Application Number

EP 05 29 2324

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 1 500 684 A (ARKEMA) 26 January 2005 (2005-01-26) * paragraphs [0051], [0052], [0054]; claim 1 * | 1,2 | INV. C08G69/44 C08G69/40 |
| A,D | US 4 230 838 A (FOY ET AL) 28 October 1980 (1980-10-28) * example 1 * | 1,2 | |
| A | US 3 766 119 A (SNAPP T,US ET AL) 16 October 1973 (1973-10-16) * claim 1; examples 1,2 * | 1,4-10 | |
| A | US 2002/187170 A1 (PAVLIN MARK S) 12 December 2002 (2002-12-12) * claims 1,18 * | 1,7,8 | |

TECHNICAL FIELDS
SEARCHED     (IPC)

C08G

The present search report has been drawn up for all claims

| Place of search | Date of completion of the search | Examiner |
|---|---|---|
| The Hague | 10 May 2006 | Glanddier, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 05 29 2324

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2006

| Patent document cited in search report | | | Publication date | Patent family member(s) | | Publication date |
|---|---|---|---|---|---|---|
| EP 1500684 | A | | 26-01-2005 | NONE | | |
| US 4230838 | A | | 28-10-1980 | AR | 214388 A1 | 15-06-1979 |
| | | | | BE | 829700 A1 | 15-09-1975 |
| | | | | BR | 7503436 A | 25-05-1976 |
| | | | | CH | 606194 A5 | 31-10-1978 |
| | | | | CS | 192544 B2 | 31-08-1979 |
| | | | | DD | 120036 A5 | 20-05-1976 |
| | | | | DE | 2523991 A1 | 18-12-1975 |
| | | | | FR | 2273021 A1 | 26-12-1975 |
| | | | | GB | 1473972 A | 18-05-1977 |
| | | | | IT | 1038574 B | 30-11-1979 |
| | | | | JP | 1201939 C | 25-04-1984 |
| | | | | JP | 50159586 A | 24-12-1975 |
| | | | | JP | 56045419 B | 26-10-1981 |
| | | | | LU | 72615 A1 | 08-10-1975 |
| | | | | MX | 3162 E | 27-05-1980 |
| | | | | NL | 7506488 A | 02-12-1975 |
| | | | | SE | 422805 B | 29-03-1982 |
| | | | | SE | 7506234 A | 01-12-1975 |
| | | | | US | 4332920 A | 01-06-1982 |
| US 3766119 | A | | 16-10-1973 | NONE | | |
| US 2002187170 | A1 | | 12-12-2002 | CA | 2447107 A1 | 21-11-2002 |
| | | | | EP | 1392759 A1 | 03-03-2004 |
| | | | | JP | 2004532324 T | 21-10-2004 |
| | | | | MX | PA03010423 A | 02-04-2004 |
| | | | | PL | 367294 A1 | 21-02-2005 |
| | | | | WO | 02092663 A1 | 21-11-2002 |
| | | | | US | 2003236387 A1 | 25-12-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1500684 A
- EP 1560872 A
- EP 1262527 A
- US 4331786 A
- US 4115475 A
- US 4195015 A
- US 4839441 A
- US 4864014 A
- US 4230838 A
- US 4332920 A
- US 5936030 A
- US 20020007041 A
- US 4483975 A
- DE 3730504
- US 5459230 A
- EP 613919 A
- US 6590065 B
- US 4252920 A
- JP 07145368 A
- JP 06287547 A